# EUROPÄISCHE PATENTSCHRIFT

(11) **EP 2 574 803 B1**
(45) Veröffentlichungstag und Bekanntmachung des Hinweises auf die Patenterteilung: **08.04.2015**
(21) Anmeldenummer: 11183511.2
(22) Anmeldetag: 30.09.2011
(51) Int. Cl.: F16C 19/30, F16C 33/58, F16C 33/66

(54) **Axialwälzlager mit Notschmierung**
Axial roller bearing with emergency lubrication
Palier à roulement axial doté d'une lubrification d'urgence

(43) Veröffentlichungstag der Anmeldung: 03.04.2013
(73) Patentinhaber: GKN Driveline Köping AB, 731 36 Köping (SE)
(72) Erfinder: Nett, Hans-Peter, 53518 Adenau (DE); Adelt, Matthias, 44807 Bochum (DE)
(74) Vertreter: Tersteegen, Felix

(56) Entgegenhaltungen:
- JP-A- 2006 170 370
- US-A- 3 981 549
- US-A- 5 938 349
- US-A1- 2003 190 106
- US-A1- 2006 023 986
- US-A1- 2011 167 944

## Beschreibung

Die Erfindung betrifft eine Ausgleichseinheit zur Verwendung in einem über eine Kupplungsbaugruppe mit einer Kupplungsvorrichtung wahlweise zuschaltbaren oder abschaltbaren Sekundärteil eines Gesamtantriebsstrangs eines Kraftfahrzeugs, der neben dem Sekundärteil einen permanent angetriebenen Primärteil aufweist, wobei die Ausgleichseinheit eine Ölfördereinrichtung aufweist, die bei zugeschaltetem Sekundärteil des Antriebsstrangs Öl für die Kupplungs- und Lagerbeölung fördert und bei vom Primärteil entkoppeltem Sekundärteil des Antriebsstrangs still steht und kein Öl für die Kupplungs- und Lagerbeölung fördert, wobei die Ausgleichseinheit ein Axialwälzlager aufweist. Der Begriff "Axialrollenlager" schließt dabei den Begriff "Axialnadellager" ein.

Gegenstand der Erfindung ist insbesondere die Verwendung eines bestimmten Axialrollenlagers bei einer Kupplungsbaugruppe, die Teil einer differentialbehafteten kupplungsgesteuerten Ausgleichseinheit eines Kraftfahrzeugs ist, bei der die rotatorische Entkopplung der in Bezug auf eine Kupplungsvorrichtung der Kupplungsbaugruppe antriebsseitigen und abtriebsseitigen Welle für den Betrieb mit geöffneter Kupplung erforderlich ist. Mit einer solchen Ausgleichseinheit werden insbesondere Fahrzeuge ausgestattet, die über eine differentialbehaftete, kupplungsgesteuerte Querausgleichseinheit anstelle eines herkömmlichen Differentials verfügen, und bei denen im sogenannten Disconnect-Betrieb ein nur wahlweise in den Antriebsleistungsfluss zuschaltbarer Sekundärteil des Antriebsstrangs für den wahlweisen Betrieb des Fahrzeugs mit Allradantrieb vorgesehen ist.

Bei einer Ausgleichseinheit, deren Bestandteil die Kupplungsbaugruppe bevorzugt ist, kann es sich sowohl um eine Quer- als auch um eine Längsausgleichseinheit handeln. Besonders bevorzugt wird die Erfindung jedoch bei einer Querausgleichseinheit eingesetzt, insbesondere bei einer differentialbehafteten Querausgleichseinheit, bei der beide Sekundärachsantriebsräder des Sekundärteils des Antriebsstrangs über eine einzige einer Seitenwelle zugeordnete Kupplungsvorrichtung in den Antriebsleistungsfluss eingekoppelt werden und so der Sekundärteil des Antriebsstrangs dem Primärteil durch Schließen der Kupplungsvorrichtung zugeschaltet bzw. durch Öffnen der Kupplungsvorrichtung von diesem entkoppelt wird.

Bei derartigen Anwendungen kann es sein, dass verwendete Axialrollenlager über eine nicht unerheblich lange Zeit trocken laufen müssen, etwa weil aufgrund der Wahl eines bestimmten Betriebszustands einer Vorrichtung, deren Bestandteil das Axialrollenlager ist, eine Beölungseinrichtung bewusststillgelegtwird.

Axialrollenlager sind dem Fachmann allgemein bekannt. Solche Lager ermöglichen axial hoch belastbare, stoßunempfindliche und steife Lagerungen und haben bei entsprechender Ausgestaltung einen äußerst geringen axialen Platzbedarf. Insbesondere Axialnadellager, also Axialrollenlager mit besonders dünnen Rollen, benötigen in Fällen, in denen die angrenzenden Maschinenteile als Laufbahn verwendet werden, kaum mehr axialen Raum als eine ansonsten verwendete, separate Lagerscheibe zur Ausbildung einer Lauffläche.

Axialrollenlager haben allerdings den Nachteil, dass durch die zylindrische Form der Rollen und den sich dadurch ergebenden unterschiedlichen Abrollweg der Rollenmantelfläche auf der Lauffläche der radial außen liegende Teil der Rollenmantelfläche je Winkelmaß über einen größeren Weg abrollen muss als der radial innen liegende Teil Rollenmantelfläche. So entsteht ein Schlupf zwischen Rollenmantelfläche und Lauffläche, aufgrund dessen eine ausreichende Schmierung eines Axialrollenlagervon besonderer Bedeutung ist und in vielen Anwendungen, in denen das Axialrollenlager nicht in einem Ölbad läuft, eine gezielte und andauernde Beölung erforderlich ist.

Eine Ausgleichseinheit wie eingangs genannt ist beispielsweise in der EP 2 116 411 A1 beschrieben. Hier tauchen Bauteile, insbesondere der die Ölversorgung der Kupplung bei zugeschaltetem Sekundärteil sicherstellende Außenlamellenträger, in ein Ölreservoir ein. Ein Problem aufgrund eines potentiellen Trockenlaufens eines beölungsbedürftigen Axiallagers stellt sich jedoch nicht, weil das verwendete Axiallager mit Bauteilen in Kontakt steht, die bei entkoppeltem Sekundärteil still stehen. Nachteilig an dieser Ausgestaltung ist überdies, dass durch das dauerhafte Eintauchen der dauerhaft rotierenden Innenlamellen in ein Ölreservoir infolge hydrodynamischer Reibung auch dann dauerhaft Verlustleistung entsteht, wenn der Sekundärteil des Antriebsstrangs stillgelegt ist.

Auch die US 2011/0167944 A1 beschreibt eine Ausgleichseinheit mit einer Kupplungsbaugruppe, ohne sich jedoch mit etwaigen Problemen der Ölversorgung von Bauteilen auseinanderzusetzen.

Ferner ist aus der Druckschrift US 5,938,349 bekannt, dass eine bestimmte Gestaltung des Lagerrings gewährleisten kann, dass im Lager befindliche Schmierstoffe nicht nach außen ablaufen, so dass die Lagerschmierung auch bei unregelmäßiger Beölung besser gewährleistet ist.

Aufgabe der Erfindung ist es, eine Kupplungseinheit der eingangs genannten Art mit verlustoptimierter Beölung zur Verfügung zu stellen, bei der die Beölung eingesetzter Axialwälzlager über einen längeren Zeitraum auch ohne zusätzliche, gezielte Schmierung durch eine gesonderte Beölungseinrichtung gewährleistet ist. Die Gefahr eines infolge zu langen Trockenlaufens entstehenden Schadens soll minimiertwerden.

Diese Aufgabe wird nach der Erfindung dadurch gelöst, dass die Ausgleichseinheit derart ausgebildet ist, dass das Axialwälzlager bei entkoppeltem Sekundärteil und still stehender Ölfördereinrichtung nach wie vor rotiert, aber nicht mit Öl versorgt wird, und dass das Axialwälzlager als Axialwälzlager mit Notschmierung ausgebildet ist und einen eine Lagerlauffläche ausbildenden Lagerring aufweist, an dem zur Gewährleistung einer Notschmierung radial außenseitig eine Ölsammelrinne vorgesehen ist. Insbesondere bildet der Lagerring selbst diese Ölsammelrinne aus. Die Ölsammelrinne gewährleistet, dass sich das Öl, das in einem Betriebszustand, in dem dem Lager über eine Ölfördereinrichtung noch Öl zugeführt worden ist, in der Sammelrinne sammelt und zur Schmierung des Lagers auch dann beiträgt, wenn die Ölfördereinrichtung betriebszustandsbedingt abgeschaltet wird.

In einer bevorzugten Ausgestaltung ist der Lagerring zur Ausbildung der Ölsammelrinne radial außenseitig U-förmig gestaltet, wobei die offene Ölsammelrinnenseite radial nach innen weist. Dies ermöglicht eine einfache Fertigung des Lagerrings. Der Lagerring weist zur Ausbildung der Sammelrinne einen ersten im Wesentlichen radial ausgerichteten Schenkel und einem dem ersten Schenkel gegenüberliegenden im Wesentlichen radial ausgerichteten zweiten Schenkel auf. Bevorzugt geht der erste Schenkel radial einwärts in die vom Lagerring ausgebildete Lagerlauffläche über. Der erste Schenkel und der zweite Schenkel sind wie auch der Teil des Lagerrings, der die Lauffläche bildet, bevorzugt integraler Teil eines werkstoffeinstückig ausgebildeten Lagerrings, so dass der erste Schenkel nahtlos und werkstoffeinstückig in den Teil des Lagerrings, der die Lauffläche bildet, übergeht.

Weiter ist vorgesehen, dass für die Rollen ein Wälzkörperkäfig vorgesehen ist, der in die Ölsammelrinne hineinragt. Der Wälzkörperkäfig ist dadurch in der Lage, bei Drehung relativ zum Lagerring Öl mitzunehmen, welches dann fliehkraft- und/oder schwerkraftbedingt umgewälzt und den Rollen bzw. der Lagerlauffläche so zwecks Notschmierung zugeführt wird.

Weiter kann eine der Lagerlauffläche gegenüberliegende, also auf der anderen Seite der Rollen angeordnete Anlaufscheibe vorgesehen sein. Die Anlaufscheibe kann insbesondere mit ihrem radial nach außen gerichteten Rand den zweiten Schenkel überlappen, wobei dies bevorzugt auf der zum Wälzkörper gerichteten Seite des zweiten Schenkels geschieht, so dass die Anlaufscheibe in die Ölsammelrinne hineinragt. Der zweite Schenkel und die Anlaufscheibe überlappen sich in diesem Fall. Die Anlaufscheibe dient als eine Art Verlängerung des zweiten Schenkels. Der durch die Ölsammelrinne gebildete Ölraum wird durch die Anlaufscheibe vergrößert. Der Spalt zwischen Anlaufscheibe und zweitem Schenkel ist dabei so gering wie möglich zu halten. Um den Lagerring, insbesondere den zweiten Schenkel des Lagerrings außen- oder innenseitig zu übergreifen, weist die Anlaufscheibe radial außenseitig bevorzugt eine Abkröpfung auf.

Zwischen Anlaufscheibe und Lagerring, insbesondere zwischen der Abkröpfung an der Anlaufscheibe und dem zweiten Schenkel des Lagerrings, kann außerdem ein Dichtring vorgesehen sein, der das Ablaufen des in der Sammelrinne befindlichen Öls durch den zwischen Anlaufscheibe und Lagerring bestehenden Spalt verhindert oder zumindest erschwert. Aufgrund der Relativbewegung zwischen Anlaufscheibe und Lagerring ist der Dichtring bevorzugt als schmale Dichtlippe ausgebildet.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine Vorrichtung, deren Bestandteil ein Axialrollenlager ist und
- Fig. 2: eine Gegenüberstellung von Axialrollenlagern unterschiedlicher Ausgestaltung.

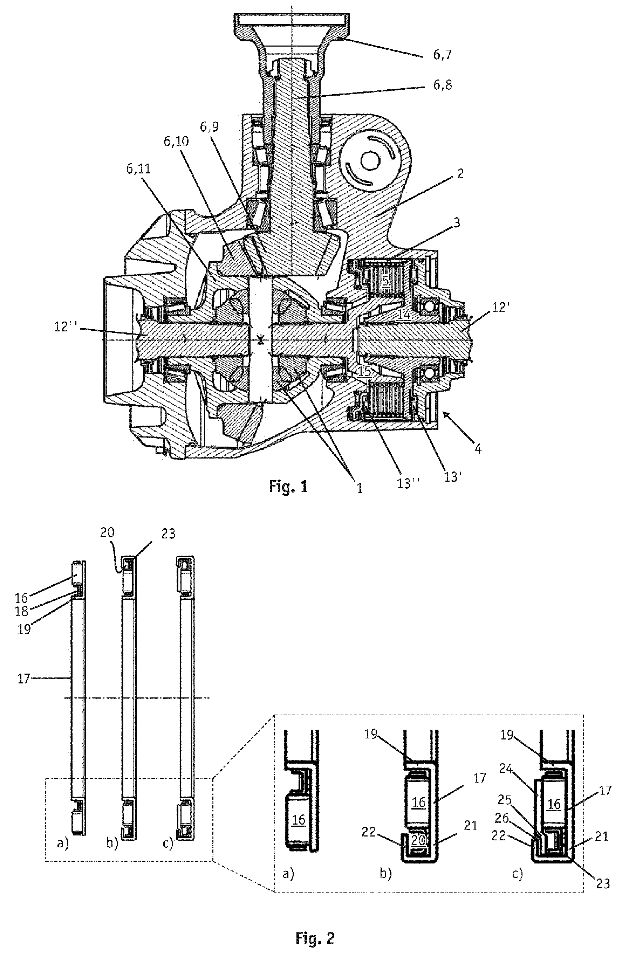

Anhand von Figur 1 wird ein Anwendungsfall erläutert, bei dem zwei Axialrollenlager gezeigt sind, wie sie aus dem Stand der Technik bekannt sind. Die Verwendung eines der in den Figuren 2b oder 2c dargestellten Axialrollenlager für den nachfolgend in Bezug auf Figur 1 erläuterten Anwendungsfall stellt die Erfindung dar.

In Figur 1 ist eine aus dem Stand der Technik (EP 2 116 411) bekannte Querausgleichseinheit gezeigt, die Teil eines wahlweise aus dem Antriebsleistungsfluss entkoppelbaren oder diesem zuschaltbaren Sekundärteil des Gesamtantriebsstrangs ist. Neben dem Sekundärteil weist der Gesamtantriebsstrang also einen permanent angetriebenen Primärteil und den nur im Bedarfsfall angetriebenen Sekundärteil auf. Die gezeigte Querausgleichseinheit stellt als Teil des Sekundärteils des Antriebsstrangs eine differentialbehaftete kupplungsgesteuerte Ausgleichseinheit zum Antrieb der Sekundärantriebsräder (nicht dargestellt) dar.

Die in Figur 1 gezeigte Querausgleichseinheit weist auf einer Seite eines Differentialgetriebes 1, in der Figur beispielhaft auf der rechten Seite des Differentialgetriebes 1, eine Kupplungsbaugruppe 4 auf, die in einem von einem Gehäuse 2 gebildeten Kupplungsraum 3 angeordnet ist. Teil der Kupplungsbaugruppe 4 ist eine Lamellenkupplung 5. Die Antriebsleistung wird über eine Kette von Eingangsgliedern 6 der Ausgleichseinheit (gezeigt sind unter anderem Kardanwellenflansch 7, Kegelradwelle 8 mit Kegelrad 9, Tellerrad 10, Differentialkorb 11) in das Differentialgetriebe 1 geleitet. Von dort aus wird die Antriebsleistung in grundsätzlich bekannter Weise auf die Seitenstränge der Ausgleichseinheit, also insbesondere auf die Seitenwellen 12' und 12", übertragen, wobei in einer der beiden Seitenstränge die Kupplungsbaugruppe 4 mit der Kupplung 5 vorgesehen ist.

Die Ausgleichseinheit ist Teil eines Sekundärteils eines Antriebsstrangs mit permanent angetriebenen Primärteil und einem nur im Bedarfsfall angetriebenen Sekundärteil. Zu diesem Zweck ist der Sekundärteil des Antriebsstrangs unter anderem über die Kupplungsbaugruppe 4 vom Antriebsleistungsfluss abkoppelbar, wenn das Fahrzeug nicht im Allradmodus, sondern lediglich über die Primärachse (nicht gezeigt) im Einachsbetrieb angetrieben werden soll.

Zwecks Entkopplung des Sekundärteils des Antriebsstrangs wird die in den Figuren beispielhaft als Lamellenkupplung 5 dargestellte Kupplungsvorrichtung geöffnet, so dass die damit verbundene Seitenwelle 12' aus dem Antriebsleistungsfluss herausgenommen wird. Wegen des zwischengeschalteten Differentialgetriebes 1, das wegen der geöffneten Kupplung 5 kein Drehmoment mehr überträgt, wird auch keine Antriebsleistung mehr über die gegenüberliegende Seitenwelle 12" übertragen. Außerdem werden die Eingangsglieder 6 der Ausgleichseinheit über PTU (Power-Take-Off Unit) und eine Bremsvorrichtung von dem Primärteil des Antriebsstrangs entkoppelt und abgebremst (PTU und Bremsvorrichtung nicht gezeigt, bevorzugt primärachsseitig angeordnet), so dass diese bei entkoppeltem Sekundärteil des Antriebsstrangs stehen.

Bei zugeschaltetem Sekundärteil, also im Allradmodus, fördert eine Ölfördereinrichtung Öl zur Kupplungsbeölung, wobei die Ölfördereinrichtung mit einem Antriebsglied gekoppelt ist, das bei entkoppeltem Sekundärteil des Antriebsstrangs still steht. Bevorzugt wird das Tellerrad 10 als Ölfördereinrichtung eingesetzt, in dem dieses und das Gehäuse 2 der Ausgleichseinheit so aufeinander abgestimmt sind, dass das Tellerrad 10 bei zugeschalteter Sekundärachse aufgrund seiner Rotation Öl an der Gehäuseinnenwandung entlang zu einem im Gehäuse 2 vorgesehenen Ölauffang schaufelt. Von dort aus gelangt es über Ölzuführungskanäle zu der Kupplung 5 und den Axialwälzlagern 13', 13".

Nach Entkopplung des Sekundärachsantriebsstrangs aus dem Antriebsleistungsfluss steht die Ölfördereinrichtung zur Kupplungsbeölung, im vorstehend angeführten Beispiel also das Tellerrad 10, jedoch konzeptbedingt still. Es wird kein Öl mehr zu der Kupplung 5 oder den Axialwälzlagern 13', 13" gefördert. Mit Bezug auf die Kupplung 5 ist dies gewollt, weil diese zur Vermeidung von hydrodynamischer Reibung zwischen den Kupplungslamellen vollständig trocken laufen sollen, wenn der Sekundärteil des Antriebsstrangs entkoppelt ist. Aus diesem Grund liegt auch der Ölspiegel im Ölsumpf sowohl bei zugeschalteter als auch bei entkoppeltem Sekundärteil unterhalb der Seitenwellenkupplung 5. Hierdurch ist gewährleistet, dass die Kupplungslamellen nicht im Öl stehen und hydrodynamische Reibung zwischen den Lamellen nicht entstehen kann.

Allerdings steht damit das Öl auch unterhalb der Axialrollenlager 13', 13". Mit Blick auf die Axialrollenlager entsteht so das Problem, das diese bei entkoppeltem Sekundärteil des Antriebsstrangs zwar nach wie vor rotieren, gleichwohl aber nicht mehr mit Öl versorgt werden, denn die Ölfördereinrichtung steht still und die Axialrollenlager 13', 13" stützten sich gegen Bauteile ab, die von einem auf der Straße abrollenden Sekundärachsantriebsrad auch bei entkoppeltem Sekundärteil des Antriebsstrangs geschleppt werden. Das radseitige Axialrollenlager 13' rotiert infolge der Tatsache, dass die in Bezug auf die Kupplungsvorrichtung 5 abtriebsseitigen Kupplungsglieder (in Figur 1 zum Beispiel der Außenlamellenträger 14) von dem auf der Straße abrollenden Rad geschleppt werden. Das differentialseitige Axiallager 13" dreht sich entweder aufgrund der Tatsache, dass die Eingangsglieder 6 der Ausgleichseinheit bei entkoppeltem Sekundärteil des Antriebsstrangs still stehen und die Drehung der linken Seitenwelle 12" sich infolge dessen über das Differentialgetriebe 1 unter Umkehr der Drehrichtung auf die in Bezug auf die Kupplungsvorrichtung 5 antriebsseitigen Kupplungsglieder (in Figur 1 zum Beispiel der Innenlamellenträger 15) und die damit mitrotierenden Bauteile überträgt. Oder, wenn das differentialgetriebeseitige Axialrollenlager 13" mit einem Bauteil mitrotiert bzw. in Anlage ist, dass mit dem Außenlamellenträger 14 oder anderen in Bezug auf die Kupplungsvorrichtung 5 abtriebsseitigen Kupplungsgliedern gekoppelt ist, dreht es sich - wie auch das radseitige Axialrollenlager 13' - mit diesen mit.

In dem Fall, dass der Sekundärteil des Antriebstrangs vom Primärteil entkoppelt ist, kann die Kupplung 5 also vollständig trocken laufen und Kupplungseingangsseite und Kupplungsausgangsseite können quasi reibungsfrei gegeneinander rotieren, wohingegen insbesondere bei hohen Geschwindigkeiten die Gefahr besteht, dass die Axialrollenlager 13' und 13" aufgrund fehlender Beölung trockenlaufen und Schaden nehmen. Die Erfindung macht sich zur Aufgabe, dies zu verhindern.

Figur 2 zeigt verschiedene Typen eines Axialrollenlagers. Das in Figur 2a gezeigte Axialrollenlager illustriert eine aus dem Stand der Technik grundsätzlich bekannte Ausführung. Die Wälzkörper bzw. die Rollen 16 rollen auf einer von einem Lagerring 17 gebildeten Lauffläche ab. Mittels eines Rollenkäfigs 18 wird ein Rollenkranz gebildet. Der Rollenkäfig ist innenseitig über einen Zentrierbund 19 geführt. Es ist ersichtlich, dass unter anderem für den zu Figur 1 beschriebenen Anwendungsfall das Axialrollenlager gemäß Figur 2a bei abgeschaltetem Sekundärteil des Antriebsstrangs trocken laufen würde. Schmier- und Kühlöl würde fliehkraft- oder schwerkraftbedingt abfließen. Eine ausreichende Schmierung kann, ohne dass über eine gesonderte Ölfördereinrichtung Öl zugeführt werden würde, nicht gewährleistet werden. Abhilfe schaffen die in Figur 2b und Figur 2c gezeigten Lagergestaltungen, die nachfolgend auch mit Blick auf die in Figur 1 dargestellte Ausgleichseinheit beschrieben werden.

Das Axialrollenlager gemäß Figur 2b und Figur 2c weist einen Lagerring 17 auf, der zur Ausbildung einer umlaufenden Ölsammelrinne 20 einen ersten im Wesentlichen radial ausgerichteten Schenkel 21 und einem dem ersten Schenkel 21 gegenüberliegenden im Wesentlichen radial ausgerichteten zweiten Schenkel 22 aufweist. Der erste Schenkel 21 geht dabei werkstoffeinstückig in die vom Lagerring 17 ausgebildete Lagerlauffläche über.

Der Lagerring 17 ist radial außenseitig U-förmig umgebogen und bildet eine Ölsammelrinne 20, die einseitig offen ist und mit der Öffnung radial nach innen weist. Hierin sammelt sich das zur Kupplungs- und Lagerschmierung bei zugeschaltetem Sekundärteil des Antriebsstrangs von der Ölfördereinrichtung geförderte Öl. Bei Entkopplung des Sekundärteils des Antriebstrangs läuft das in der Ölsammelrinne befindliche Öl nicht ab.

Der Wälzkörperkäfig 23 ragt - anders als bei dem in Figur 2a gezeigten Lager - bei den in Figur 2b und 2c gezeigten Lagern nicht radial einwärts in Richtung des Zentrierbundes 19, sondern radial nach außen in die Ölsammelrinne 20 hinein. Der sich mit den Rollen 16 mitdrehende, feingliedrige Käfig 23 durchkämmt das in der Ölsammelrinne 20 befindliche Öl, dass in der Folge die Lauffläche verstärkt benetzt und eine Notschmierung gewährleistet.

Um diesen Effekt auch auf der anderen Seite der Wälzkörper zu erzielen, kann dort, wie Figur 2c illustriert, eine Anlaufscheibe 24 vorgesehen sein, die über den gleichen Effekt innenseitig von Öl benetzt wird. Die Anlaufscheibe 24 überlappt mit ihrem radial nach außen gerichteten Rand den zweiten Schenkel 22 des Lagerrings 17 und greift mit ihrem radial auswärts gerichteten Rand in die Ölsammelrinne 20 ein. Hierzu weist die Anlaufscheibe 24 radial außenseitig eine Abkröpfung 25 auf, die den zweiten Schenkel 22 des Lagerrings 17 innenseitig übergreift. Zwischen Anlaufscheibe 24 und Lagerring 17, insbesondere zwischen der Abkröpfung 25 der Anlaufscheibe und dem zweiten Schenkel 22 des Lagerrings 17, kann ein an der Anlaufscheibe oder am zweiten Schenkel angeordneter Dichtring 26 nach Art einer schmalen Dichtlippe vorgesehen sein, die das Ablaufen des in der Sammelrinne 20 befindlichen Öls durch den zwischen Anlaufscheibe 24 und Lagerring 17 bestehenden Spalt verhindert oder zumindest erschwert.

Die Ausgestaltung gemäß Figur 2c hat gegenüber der Ausgestaltung nach Figur 2b den Vorteil, dass die Ölsammelrinne 20 durch die zusätzlich hinzukommende Anlaufscheibenhöhe deutlich tiefer ist und daher mehr Öl aufnehmen kann. Die Rollen 16 stehen im Öl und werden optimal geschmiert.

Es ist ersichtlich, dass die in Figur 2b und Figur 2c dargestellten Axialrollenlager sich in erfinderischer Weise für eine Anwendung eignen, bei der eine Querausgleichseinheit wie in Figur 1 dargestellt und wie vorstehend beschrieben zum Einsatz kommt. Das Abschalten des Sekundärteils des Antriebsstrangs ermöglicht nach wie vor das vollständige Trockenlaufen der Kupplung 5. Ein gleichzeitiges Trockenlaufen der Axialrollenlager 13', 13" kann aber verhindert werden.

Die Erfindung ist vorstehend mit Blick auf Axialrollenlager beschrieben worden, weil diese aufgrund der zylindrischen Form der Rollen und dem sich dadurch ergebenden unterschiedlichen Abrollweg der Rollenmantelfläche auf der Lauffläche einen besonderen Beölungsbedarf haben. Die Erfindung ist aber auch mit anderen Axiallagern, bei denen dieses Problem nicht oder in geringerem Maße besteht, beispielsweise Lagern mit kugelförmigen, tonnenförmigen oder kegelrollenförmigen Wälzkörpern, zur Gewährleistung einer Notschmierung denkbar. Zusammenfassend betrifft die Erfindung eine Ausgleichseinheit mit einem Axialwälzlager mit einer Notschmierung.

Das Axialwälzlager weist dabei einen eine Lagerlauffläche ausbildenden Lagerring auf, der eine Ölsammelrinne ausbildet, in der Öl, dass eine Ölfördereinrichtung in einem ersten Betriebszustand unter anderem zur Lagerschmierung fördert, gesammelt wird, und mit dem die Schmierung des Axialwälzlagers auch dann sichergestellt ist, wenn die im ersten Betriebszustand Öl fördernde Ölfördereinrichtung in einem zweiten Betriebszustand stillgelegt wird, in dem das Axiallager aber nach wie vor Schmierungsbedarf hat.

### Bezugszeichenliste

- 1: Differentialgetriebe
- 2: Gehäuse
- 3: Kupplungsraum
- 4: Kupplungsbaugruppe
- 5: Lamellenkupplung, Kupplungsvorrichtung
- 6: Eingangsglieder der Ausgleichseinheit
- 7: Kardanwellenflansch
- 8: Kegelradwelle
- 9: Kegelrad
- 10: Tellerrad,Ölfördereinrichtung
- 11: Differentialkorb
- 12', 12": Seitenwellen
- 13', 13": Axialwälzlager
- 14: Außenlamellenträger
- 15: Innenlamellenträger
- 16: Wälzkörper/Rollen
- 17: Lagerring
- 18: Rollenkäfig
- 19: Zentrierbund
- 20: Ölsammelrinne
- 21: erster Schenkel
- 22: zweiter Schenkel
- 23: Wälzkörperkäfig
- 24: Anlaufscheibe
- 25: Abkröpfung
- 26: Dichtring

## Patentansprüche

1. Ausgleichseinheit zur Verwendung in einem über eine Kupplungsbaugruppe (4) mit einer Kupplungsvorrichtung (5) wahlweise zuschaltbaren oder abschaltbaren Sekundärteil eines Gesamtantriebsstrangs eines Kraftfahrzeugs, der neben dem Sekundärteil einen permanent angetriebenen Primärteil aufweist, wobei die Ausgleichseinheit eine Ölfördereinrichtung (10) aufweist, die bei zugeschaltetem Sekundärteil des Antriebsstrangs Öl für die Kupplungs- und Lagerbeölung fördert und bei vom Primärteil entkoppeltem Sekundärteil des Antriebsstrangs still steht und kein Öl für die Kupplungs- und Lagerbeölung fördert, wobei die Ausgleichseinheit ein Axialwälzlager (13', 13") aufweist, **dadurch gekennzeichnet, dass** die Ausgleichseinheit derart ausgebildet ist, dass das Axialwälzlager (13', 13") bei entkoppeltem Sekundärteil und still stehender Ölfördereinrichtung (10) nach wie vor rotiert, aber nicht mit Öl versorgt wird, wobei das Axialwälzlager (13', 13") als Axialwälzlager mit Notschmierung ausgebildet ist und einen eine Lagerlauffläche ausbildenden Lagerring (17) aufweist, an dem zur Gewährleistung einer Notschmierung radial außenseitig eine Ölsammelrinne (20) vorgesehen ist.

2. Ausgleichseinheit nach Anspruch 1, **dadurch gekennzeichnet, dass** der Lagerring (17) zur Ausbildung der Ölsammelrinne (20) radial außenseitig U-förmig gestaltet ist, wobei die offene Ölsammelrinnenseite (20) radial nach innen weist.

3. Ausgleichseinheit nach einem der beiden vorhergehenden Ansprüche, **dadurch gekennzeichnet, dass** der Lagerring (17) zur Ausbildung der Ölsammelrinne (20) einen ersten im Wesentlichen radial ausgerichteten Schenkel (21) und einem dem ersten Schenkel gegenüberliegenden im Wesentlichen radial ausgerichteten zweiten Schenkel (22) aufweist, wobei der erste Schenkel (21) radial einwärts werkstoffeinstückig in die vom Lagerring (17) ausgebildete Lagerlauffläche übergeht.

4. Ausgleichseinheit nach einem der vorhergehenden Ansprüche, **dadurch gekennzeichnet, dass** für die Wälzkörper (16) ein Wälzkörperkäfig (18) vorgesehen ist, der in die Ölsammelrinne (20) hineinragt.

5. Ausgleichseinheit nach einem der vorhergehenden Ansprüche, **dadurch gekennzeichnet**, **dass** eine der Lagerlauffläche gegenüberliegende Anlaufscheibe (24) vorgesehen ist.

6. Ausgleichseinheit nach Anspruch 5, **dadurch gekennzeichnet, dass** die Anlaufscheibe (24) mit ihrem radial nach außen gerichteten Rand den Lagerring (17), insbesondere den zweiten Schenkel (22) des Lagerrings (17) gemäß Anspruch 3, überlappt.

7. Ausgleichseinheit nach Anspruch 5 oder Anspruch 6, **dadurch gekennzeichnet, dass** die Anlaufscheibe (24) in die Ölsammelrinne (20) hineinragt.

8. Ausgleichseinheit nach einem der vorhergehenden Ansprüche in Verbindung mit Anspruch 5, **dadurch gekennzeichnet, dass** die Anlaufscheibe (24) radial außenseitig eine Abkröpfung (25) aufweist, mit der die Anlaufscheibe (24) den Lagerring (17), insbesondere den zweiten Schenkel (22) des Lagerrings (17) gemäß Anspruch 3, innen- oder außenseitig übergreift.

9. Ausgleichseinheit nach einem der vorhergehenden Ansprüche in Verbindung mit Anspruch 5, **dadurch gekennzeichnet, dass** zwischen Anlaufscheibe (24) und Lagerring (17), insbesondere zwischen einer Abkröpfung (25) der Anlaufscheibe (24) und dem zweiten Schenkel (22) des Lagerrings (17), ein Dichtring (26) vorgesehen ist, der das Ablaufen des in der Ölsammelrinne (20) befindlichen Öls durch den zwischen Anlaufscheibe (24) und Lagerring (17) bestehenden Spalt verhindert oder zumindest erschwert.

## Claims

1. An equalisation unit for use in a secondary part, which can be either engaged or disengaged by means of a clutch assembly (4) with a clutch device (5), of an overall drive train of a motor vehicle, which in addition to the secondary part has a continuously driven primary part, the equalisation unit having an oil-delivering device (10), which delivers oil for oiling the clutch and bearing when the secondary part of the drive train is engaged and is deactivated and does not deliver oil for oiling the clutch and bearing when the secondary part of the drive train is decoupled from the primary part, the equalisation unit having an axial rolling bearing (13', 13"), **characterised in that** the equalisation unit is formed in such a manner that the axial rolling bearing (13', 13") still rotates but is not supplied with oil when the secondary part is decoupled and the oil-delivering device (10) is deactivated, wherein the axial rolling bearing (13', 13") is formed as an axial rolling bearing with emergency lubrication and has a bearing ring (17) that forms a bearing running face, on which an oil collection channel (20) is provided on the radial outer side to ensure emergency lubrication.

2. The equalisation unit according to Claim 1, **characterised in that** the bearing ring (17) is U-shaped on the radial outer side in order to form the oil collection channel (20), wherein the open oil collection channel side (20) faces radially inwards.

3. The equalisation unit according to any one of the two preceding claims, **characterised in that** the bearing ring (17) has a first substantially radially facing limb (21) and a second substantially radially facing limb (22) opposite the first limb in order to form the oil collection channel (20), wherein the first limb (21) merges radially inwards in a materially integral manner into the bearing running face formed by the bearing ring (17).

4. The equalisation unit according to any one of the preceding claims, **characterised in that** a rolling body cage (18) is provided for the rolling bodies (16), which projects into the oil collection channel (20).

5. The equalisation unit according to any one of the preceding claims, **characterised in that** a thrust washer (24) is provided opposite the bearing running face.

6. The equalisation unit according to Claim 5, **characterised in that** the thrust washer (24) overlaps with its radially outward-facing edge the bearing ring (17), in particular the second limb (22) of the bearing ring (17) according to Claim 3.

7. The equalisation unit according to Claim 5 or 6, **characterised in that** the thrust washer (24) projects into the oil collection channel (20).

8. The equalisation unit according to any one of the preceding claims in conjunction with Claim 5, **characterised in that** the thrust washer (24) has on the radially outer side a bend (25), with which the thrust washer (24) fits over the inside or outside of the bearing ring (17), in particular the second limb (22) of the bearing ring (17) according to Claim 3.

9. The equalisation unit according to any one of the preceding claims in conjunction with Claim 5, **characterised in that** a sealing ring (26) is provided, between the thrust washer (24) and the bearing ring (17), in particular between a bend (25) in the thrust washer (24) and the second limb (22) of the bearing ring (17), which sealing ring (26) prevents the oil situated in the oil collection channel (20) running through the gap between the thrust washer (24) and the bearing ring (17) or at least makes it more difficult.

## Revendications

1. Unité de compensation destinée à être utilisée dans une partie secondaire d'une chaîne cinématique intégrale d'un véhicule automobile, pouvant être au choix enclenchée ou déconnectée par un ensemble d'accouplement (4) avec un dispositif d'accouplement (5), qui comporte en plus de la partie secondaire, une partie primaire entraînée de façon permanente, l'unité de compensation comprenant un dispositif d'alimentation d'huile (10) qui délivre de l'huile pour la lubrification de l'embrayage et des paliers lorsque la partie secondaire de la chaîne cinématique est enclenchée et ne délivre pas d'huile pour la lubrification de l'embrayage et des paliers lorsque la partie secondaire de la chaîne cinématique désaccouplée de la partie primaire est à l'arrêt, ladite unité de compensation comportant un roulement axial (13', 13''), **caractérisée en ce que** l'unité de compensation est constituée de telle sorte que le roulement axial (13', 13") tourne toujours avec la partie secondaire désaccouplée et le système d'alimentation d'huile (10) à l'arrêt, mais n'est pas alimenté en huile, le roulement axial (13', 13'') étant constitué comme roulement axial avec lubrification d'urgence et comportant une bague-palier (17) constituant une surface de portée sur laquelle est prévue radialement du côté extérieur un conduit collecteur d'huile (20) destiné à garantir une lubrification d'urgence.

2. Unité de compensation selon la revendication 1 **caractérisée en ce que**, la bague-palier (17) est constituée radialement en extérieur en forme de U pour former le conduit collecteur d'huile (20), le côté ouvert du conduit collecteur d'huile (20) étant tourné radialement vers l'intérieur.

3. Unité de compensation selon l'une quelconque des deux revendications précédentes, **caractérisée en ce que** la bague-palier (17) comporte pour former le conduit collecteur d'huile (20), une première branche (21) pour l'essentiel orientée radialement et une deuxième branche (22) pour l'essentiel orientée radialement, opposée à la première branche, la première branche (21) passant radialement vers l'intérieur en une seule pièce de matériau dans la surface de portée constituée par la bague-palier (17).

4. Unité de compensation selon l'une quelconque des revendications précédentes, **caractérisée en ce qu'**une cage de corps de roulement (18) est prévue pour les corps de roulement (16) qui pénètre dans le conduit collecteur d'huile (20).

5. Unité de compensation selon l'une quelconque des revendications précédentes, **caractérisée en ce qu'**un disque de frottement (24) opposé à la surface de portée est prévu.

6. Unité de compensation selon la revendication 5, **caractérisée en ce que** le disque de frottement (24) chevauche la bague-palier (17) avec son bord radialement orienté vers l'extérieur, en particulier la deuxième branche (22) de la bague-palier (17) selon la revendication 3.

7. Unité de compensation selon la revendication 5 ou la revendication 6, **caractérisée en ce que** le disque de frottement (24) pénètre dans le conduit collecteur d'huile (20).

8. Unité de compensation selon l'une quelconque des revendications précédentes en liaison avec la revendication 5, **caractérisée en ce que** le disque de frottement (24) comporte radialement en extérieur un décrochement (25) avec lequel le disque de frottement (24) vient couvrir la bague-palier (17) du côté intérieur ou extérieur, en particulier la deuxième branche (22) de la bague-palier (17) selon la revendication 3.

9. Unité de compensation selon l'une quelconque des revendications précédentes en liaison avec la revendication 5, **caractérisée en ce qu'**entre le disque de frottement (24) et la bague-palier (17), en particulier entre un décrochement (25) du disque de frottement (24) et la deuxième branche (22) de la bague-palier (17), une bague d'étanchéité (26) est prévue qui évite ou rend au moins plus difficile l'écoulement par l'interstice existant entre le disque de frottement (24) et la bague-palier (17) de l'huile se trouvant dans le conduit collecteur d'huile (20).
